# EUROPEAN PATENT APPLICATION

(11) **EP 4 475 460 A1**
(43) Date of publication of application: **11.12.2024**
(21) Application number: 22924790.3
(22) Date of filing: 03.02.2022
(51) Int. Cl.: H04B 10/291

(54) **OPTICAL COMMUNICATION SYSTEM, BRANCH STATION, AND COMMUNICATION METHOD**

(71) Applicant: Nippon Telegraph And Telephone Corporation, Chiyoda-ku Tokyo 100-8116 (JP); NTT DOCOMO, INC., Tokyo 100-6150 (JP)
(72) Inventor: ITO Kota, Musashino-shi, Tokyo 180-8585 (JP); TAKAHASHI Yuta, Musashino-shi, Tokyo 180-8585 (JP); SUGA Mizuki, Musashino-shi, Tokyo 180-8585 (JP); ARAI Takuto, Musashino-shi, Tokyo 180-8585 (JP); SHIRATO Yushi, Musashino-shi, Tokyo 180-8585 (JP); UCHIDA Daisei, Musashino-shi, Tokyo 180-8585 (JP); TOSHINAGA Hideki, Musashino-shi, Tokyo 180-8585 (JP); KITA Naoki, Musashino-shi, Tokyo 180-8585 (JP); KISHIYAMA Yoshihisa, Tokyo 100-6150 (JP); SUYAMA Satoshi, Tokyo 100-6150 (JP)
(74) Representative: Brevalex
(86) International application number: PCT/JP2022/004237
(87) International publication number: WO 2023/148879

(57) **Abstract**

Provided is an optical communication system having an aggregate station at a head and a plurality of extension stations connected in series. Each of the plurality of extension stations demultiplexes a signal received from upstream-side equipment into a first demultiplexed signal having a locally allocated wavelength and a second demultiplexed signal having another wavelength and transmits the second demultiplexed signal to downstream-side equipment. Each of the plurality of extension stations multiplexes a signal received from the downstream-side equipment and a locally processed signal and transmits a multiplexing result to the upstream-side equipment.

## Description

### [Technical Field]

The present invention relates to an optical communication system, an extension station, and a communication method.

### [Background Art]

Radio waves in a millimeter-wave band are attracting attention because the radio waves can be transmitted at high speeds. However, because radio waves in the millimeter-wave band have large propagation loss, it is necessary to install wireless base stations at high density.

As a method of installing a wireless base station, a method of applying analog radio-over-fiber (RoF) is disclosed in Non-Patent Document 1. Analog RoF is technology in which an optical signal is intensity-modulated with a radio signal and the intensity-modulated optical signal is transmitted through an optical fiber, and can extract an original radio signal by performing optical-to-electrical (O/E) conversion for the transmitted optical signal.

By applying analog RoF, wireless base stations can be separated into an aggregate station that performs signal processing and an extension station having an antenna function, and a signal processing function can be integrated into the aggregate station. Thereby, it is possible to simplify and more easily install the extension station.

Non-Patent Document 2 discloses that the aggregate station and the extension stations are connected according to a cascade configuration so that the extension stations are installed more easily.

### [Citation List]

### [Non-Patent Document]

[Non-Patent Document 1]
   Kota Ito, Mizuki Suga, Yushi Shirato, Naoki Kita, and Takeshi Onizawa, Efficiently Accommodating High-frequency-band Wireless Systems by Using Analog Radio-over-fiber, NTT Technology Journal, 32(3), 15-17, 2020.
[Non-Patent Document 2]
   E.-S. Kim, M. Sung, J. H. Lee, J. K. Lee, S.-H. Cho, and J. Kim, "Coverage Extension of Indoor 5G Network Using RoF-Based Distributed Antenna System," IEEE Access, vol. 8, pp. 194992-194999, 2020.

### [Summary of Invention]

### [Technical Problem]

The extension station according to Non-Patent Document 2 distributes an optical signal using an optical splitter, and then demultiplexes the optical signal to extract an optical signal having a desired wavelength. However, the optical splitter causes the loss of the optical signal and the magnitude of the optical signal received by the extension station away from the aggregate station may be reduced.

The present invention provides an optical communication system, an extension station, and a communication method capable of suppressing the loss of an optical signal.

### [Solution to Problem]

According to an aspect of the present invention, there is provided an optical communication system having an aggregate station at a head and a plurality of extension stations connected in series, wherein each of the plurality of extension stations demultiplexes a signal received from upstream-side equipment into a first demultiplexed signal having a locally allocated wavelength and a second demultiplexed signal having another wavelength and transmits the second demultiplexed signal to downstream-side equipment, and wherein each of the plurality of extension stations multiplexes a signal received from the downstream-side equipment and a locally processed signal and transmits a multiplexing result to the upstream-side equipment.

According to an aspect of the present invention, there is provided an extension station in an optical communication system having an aggregate station at a head and a plurality of extension stations connected in series, wherein the extension station demultiplexes a signal received from upstream-side equipment into a first demultiplexed signal having a locally allocated wavelength and a second demultiplexed signal having another wavelength and transmits the second demultiplexed signal to downstream-side equipment, and wherein the extension station multiplexes a signal received from the downstream-side equipment and a locally processed signal and transmits a multiplexing result to the upstream-side equipment.

According to an aspect of the present invention, there is provided a communication method of an extension station in an optical communication system having an aggregate station at a head and a plurality of extension stations connected in series, the communication method including steps of: demultiplexing a signal received from upstream-side equipment into a first demultiplexed signal having a locally allocated wavelength and a second demultiplexed signal having another wavelength and transmitting the second demultiplexed signal to downstream-side equipment, and multiplexing a signal received from the downstream-side equipment and a locally processed signal and transmitting a multiplexing result to the upstream-side equipment.

### [Advantageous Effects of Invention]

An optical communication system, an extension station, and a communication method according to the present invention can suppress the loss of an optical signal.

### [Brief Description of Drawings]

FIG. 1 is a diagram showing a configuration of an optical communication system in which an aggregate station and an extension station are connected through a cascade configuration.
FIG. 2 is a diagram showing a configuration of the aggregate station according to a first embodiment.
FIG. 3 is a diagram showing a configuration of an i^{th} extension station (i is an integer satisfying 1 ≤ i ≤ N) according to the first embodiment.
FIG. 4 is a flowchart showing a transmission method of the aggregate station.
FIG. 5 is a flowchart showing a reception method of the aggregate station.
FIG. 6 is a flowchart showing a communication method in which the extension station communicates with upstream equipment.
FIG. 7 is a flowchart showing a communication method in which the extension station communicates with downstream equipment.
FIG. 8 is a diagram showing a configuration of an aggregate station according to a second embodiment.
FIG. 9 is a diagram showing a configuration of an i^{th} extension station (i is an integer satisfying 1 ≤ i ≤ N) according to the second embodiment.

### [Description of Embodiments]

### <Optical communication system>

### <First embodiment>

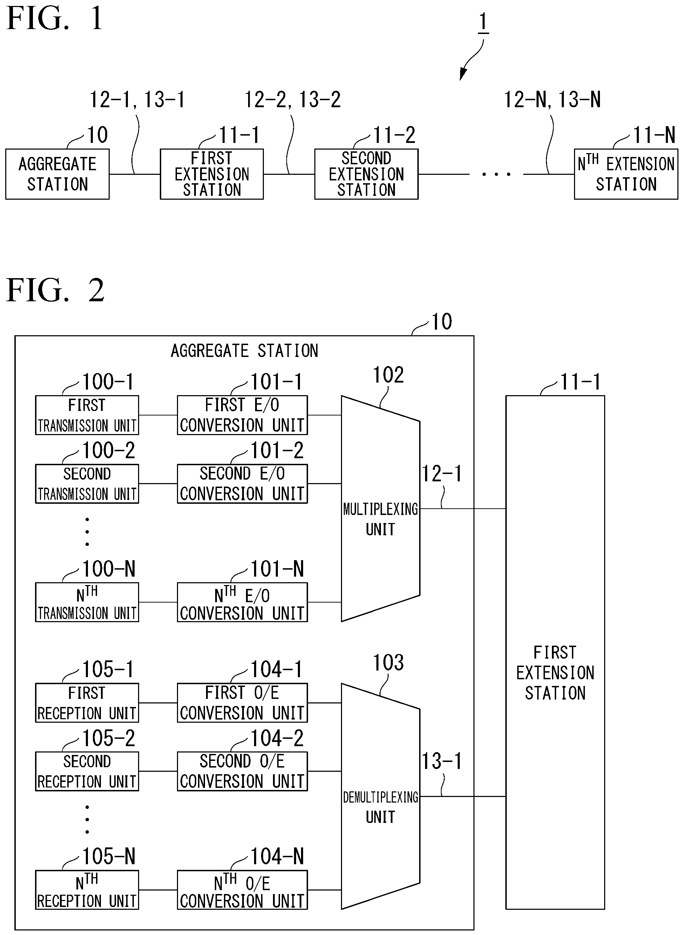

FIG. 1 is a diagram showing a configuration of an optical communication system 1 in which an aggregate station 10 and extension stations 11 are connected through a cascade configuration. The optical communication system 1 has one aggregate station 10 and N extension stations 11 (N is an integer of 2 or more). The optical communication system 1 has the aggregate station 10 at a head and the N extension stations 11 connected in series. Hereinafter, each extension station 11 is referred to as an i^{th} extension station 11-i (i is an integer satisfying 1 ≤ i ≤ N) when the N extension stations 11 are distinguished, but is simply referred to as an extension station 11 when features common to all i^{th} extension stations 11-i are described. In addition, the ordinal number i is equal to the number of hops from the aggregate station 10. In the optical communication system 1, a direction from the aggregate station 10 to the extension station 11 is referred to as a downstream direction and a direction from the extension station 11 to the aggregate station 10 is referred to as an upstream direction.

The aggregate station 10 transmits a downlink optical signal generated by performing electrical-to-optical (E/O) conversion for a generated radio signal to the first extension station 11-1. The first extension station 11-1 demultiplexes the received downlink optical signal, transmits a partial optical signal to the second extension station 11-2, locally processes the remaining optical signal, and transmits a radio signal in accordance with the optical signal. The first extension station 11-1, for example, radiates a radio signal obtained by performing optical-to-electrical (O/E) conversion for an optical signal to a space via an antenna. Second to (N-1)^{th} extension stations 11-2 to 11-(N-1) also perform operations similar to that of the first extension station 11-1. That is, the i^{th} extension station 11-i (i is an integer satisfying 2 ≤ i ≤ N-1) demultiplexes the optical signal received from an (i-1)^{th} extension station 11-(i-1), which upstream equipment, and transmits a partial optical signal to an (i+1)^{th} extension station 11-(i+1), which is downstream equipment.

The i^{th} extension station 11-i (i is an integer satisfying 2 ≤ i ≤ N-1), for example, generates an uplink optical signal by performing E/O conversion for a radio signal received via an antenna. The i^{th} extension station 11-i multiplexes an optical signal received from the downstream equipment and an uplink optical signal and transmits a merging result to the upstream equipment. That is, the i^{th} extension station 11-i multiplexes the optical signal received from the (i+1)^{th} extension station 11-(i+1) and an optical signal obtained by converting a locally received radio signal and transmits an optical signal obtained in the multiplexing process to the (i-1)^{th} extension station 11-(i-1).

That is, the optical signal transmitted from the aggregate station 10 descends to the first extension station 11-1 and the second extension station 11-2 and finally reaches the N^{th} extension station 11-N. Moreover, the optical signal transmitted from the N^{th} extension station 11-N ascends to the (N-1)^{th} extension station 11-(N-1) and finally reaches the aggregate station 10. The aggregate station 10 performs O/E conversion for the optical signal arriving thereat and acquires a radio signal. The radio signal, for example, is subjected to signal processing.

As described above, in the optical communication system 1, the aggregate station 10 is located at the head and the N extension stations 11 are connected in series. A radio signal received in the extension station 11 is converted into an optical signal without signal processing in the extension station 11 and aggregated in the aggregate station 10. The optical signal aggregated in the aggregate station 10 is converted into a radio signal and the radio signal received by the extension station 11 is extracted. Because the extension station 11 does not need to include a configuration in which signal processing of a radio signal is performed, the extension station 11 can be easily implemented.

The aggregate station 10 and the first extension station 11-1 and the i^{th} extension station 11-i and the (i+1)^{th} extension station 11-(i+1) (i is an integer satisfying 1 ≤ i ≤ N-1) are connected by two transmission paths, i.e., a downstream transmission path 12 and an upstream transmission path 13. The transmission path is, for example, an optical fiber.

FIG. 2 is a diagram showing a configuration of the aggregate station 10 according to a first embodiment. The aggregate station 10 includes a transmission unit 100, an E/O conversion unit 101, a multiplexing unit 102, a demultiplexing unit 103, an O/E conversion unit 104, and a reception unit 105. The aggregate station 10 includes N transmission units 100, N E/O conversion units 101, N O/E conversion units 104, and N reception units 105, wherein N is the same as the number of extension stations 11.

The transmission units 100 are referred to as a first transmission unit 100-1, a second transmission unit 100-2, ..., and an N^{th} transmission unit 100-N. The E/O conversion units 101 are referred to as a first E/O conversion unit 101-1, a second E/O conversion unit 101-2, ..., and an N^{th} E/O conversion unit 101-N. The O/E conversion units 104 are referred to as a first O/E conversion unit 104-1, a second O/E conversion unit 104-2, ..., and an N^{th} O/E conversion unit 104-N. The reception units 105 are referred to as a first reception unit 105-1, a second reception unit 105-2, ..., and an N^{th} reception unit 105-N.

An i^{th} transmission unit 100-i (i is an integer satisfying 1 ≤ i ≤ N) transmits an electrical signal to an i^{th} E/O conversion unit 101-i. The i^{th} E/O conversion unit 101-i (i is an integer satisfying 1 ≤ i ≤ N) converts the received electrical signal into an optical signal and transmits the optical signal to the multiplexing unit 102. The wavelengths of the optical signals transmitted to the multiplexing unit 102 by the i^{th} E/O conversion unit 101-i are different. The wavelength of the optical signal transmitted by the i^{th} E/O conversion unit 101-i is denoted by λ_{DLi} and differs according to each E/O conversion unit 101. The optical signal transmitted by the i^{th} E/O conversion unit 101-i is intended to finally reach the i^{th} extension station 11-i. The aggregate station 10 can switch the transmission unit 100 from which the electrical signal is transmitted, thereby switching the extension station 11 at which the transmitted optical signal finally arrives. Thereby, the aggregate station 10 can perform a handover or switch between whether or not to cause the extension station 11 to transmit/receive a signal.

The multiplexing unit 102 multiplexes optical signals received from the E/O conversion units 101 and transmits a multiplexing result to the first extension station 11-1. The demultiplexing unit 103 demultiplexes an optical signal received from the first extension station 11-1 and transmits the demultiplexed optical signal to the O/E conversion units 104. A wavelength of the optical signal transmitted by the demultiplexing unit 103 to the i^{th} O/E conversion unit 104-i is denoted by λ_{ULi} and differs for each O/E conversion unit 104. The optical signal having the wavelength λ_{ULi} is an optical signal transmitted from the i^{th} extension station 11-i.

The i^{th} O/E conversion unit 104-i (i is an integer satisfying 1 ≤ i ≤ N) converts the received optical signal into an electrical signal and transmits the electrical signal to the i^{th} reception unit 105-i. The i^{th} reception unit 104-5 (i is an integer satisfying 1 ≤ i ≤ N) receives the electrical signal from the i^{th} O/E conversion unit 104-i.

The aggregate station 10 and the first extension station 11-1 are connected by two transmission paths, i.e., the downstream transmission path 12-1 and the upstream transmission path 13-1. The downstream transmission path 12-1 is connected to the multiplexing unit 102 and transmits an optical signal obtained in a multiplexing process of the multiplexing unit 102 to the first extension station 11-1. The upstream transmission path 13-1 is connected to the demultiplexing unit 103 and transmits an optical signal from the first extension station 11-1 to the demultiplexing unit 103.

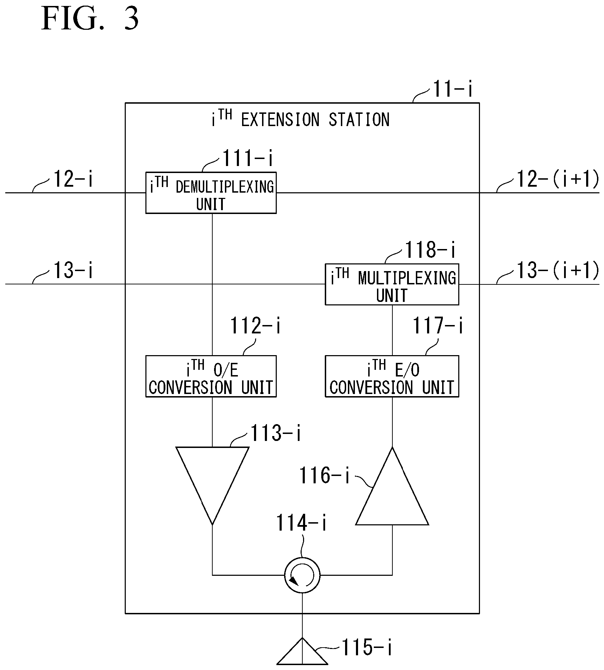

FIG. 3 is a diagram showing a configuration of the i^{th} extension station 11-i (i is an integer satisfying 1 ≤ i ≤ N) according to the first embodiment. The i^{th} extension station 11-i includes an i^{th} demultiplexing unit 111-i, an i^{th} O/E conversion unit 112-i, an i^{th} transmission amplifier 113-i, an i^{th} circulator 114-i, an i^{th} antenna 115-i, an i^{th} reception amplifier 116-i, an i^{th} E/O conversion unit 117-i, and an i^{th} multiplexing unit 118-i. Like the i^{th} extension station 11-i, the i^{th} demultiplexing unit 111-i, the i^{th} O/E conversion unit 112-i, the i^{th} transmission amplifier 113-i, the i^{th} circulator 114-i, the i^{th} antenna 115-i, the i^{th} reception amplifier 116-i, the i^{th} E/O conversion unit 117-i, and the i^{th} multiplexing unit 118-i are referred to as the demultiplexing unit 111, the O/E conversion unit 112, the transmission amplifier 113, the circulator 114, the antenna 115, the reception amplifier 116, the E/O conversion unit 117, and the multiplexing unit 118, respectively, when features not depending upon the position of the extension station 11 are described.

The i^{th} demultiplexing unit 111-i demultiplexes an optical signal received from the upstream equipment via the downstream transmission path 12-i into an optical signal having a wavelength λ_{DLi} and an optical signal having another wavelength. The i^{th} demultiplexing unit 111-i transmits the optical signal having the wavelength λ_{DLi} to the i^{th} O/E conversion unit 112-i and transmits the optical signal having the other wavelength to the (i+1)^{th} extension station 11-(i+1) via a downstream transmission path 12-(i+1).

The i^{th} O/E conversion unit 112-i converts the optical signal received from the i^{th} demultiplexing unit 111-i into an electrical signal and transmits the electrical signal to the i^{th} transmission amplifier 113-i. The i^{th} transmission amplifier 113-i amplifies the electrical signal received from the i^{th} O/E conversion unit 112-i and transmits the amplified electrical signal to the i^{th} circulator 114-i.

The i^{th} circulator 114-i transmits an electrical signal received from the i^{th} transmission amplifier 113-i to the i^{th} antenna 115-i. Moreover, the i^{th} circulator 114-i transmits the electrical signal received from the i^{th} antenna 115-i to the i^{th} reception amplifier 116-i.

The i^{th} antenna 115-i radiates an electrical signal received from the i^{th} circulator 114-i to a space. Moreover, the i^{th} antenna 115-i transmits the received electrical signal to the i^{th} circulator 114-i.

The i^{th} reception amplifier 116-i amplifies the electrical signal received from the i^{th} circulator 114-i and transmits the amplified electrical signal to the i^{th} E/O conversion unit 117-i. The i^{th} E/O conversion unit 117-i converts an electrical signal received from the i^{th} reception amplifier 116-i into an optical signal having a wavelength λ_{ULi} and transmits the optical signal to the i^{th} multiplexing unit 118-i.

The i^{th} multiplexing unit 118-i multiplexes the optical signal received from the i^{th} E/O conversion unit 117-i and the optical signal received from the (i+1)^{th} extension station 11-(i+1) via an upstream transmission path 13-(i+1) and transmits an optical signal obtained in the multiplexing process to the upstream equipment via the upstream transmission path 13-i. The first multiplexing unit 118-1 transmits an optical signal obtained in the multiplexing process to the aggregate station 10 and the i^{th} multiplexing unit 118-i (i is an integer satisfying 2 ≤ i ≤ N-1) transmits an optical signal obtained in the multiplexing process to the (i-1)^{th} extension station 11-(i-1).

Each of the i^{th} demultiplexing unit 111-i and the i^{th} multiplexing unit 118-i are, for example, a thin film filter or a fiber Bragg grating (FBG). The i^{th} demultiplexing unit 111-i demultiplexes the optical signal received from the upstream equipment and extracts an optical signal corresponding to its own station by extracting a signal having the wavelength λ_{DLi} from the demultiplexed optical signal. The i^{th} multiplexing unit 118-i multiplexes the optical signal having the wavelength λ_{ULi} received from the i^{th} E/O conversion unit 117-i and the optical signal transmitted from the (i+1)^{th} extension station 11-(i+1) and transmits an optical signal obtained in the multiplexing process to the upstream equipment. The optical signal having the wavelength λ_{ULi} transmitted from the i^{th} E/O conversion unit 117-i is finally received by the i^{th} reception unit 105-i.

The N^{th} extension station 11-N has substantially the same configuration as the i^{th} extension station 11-i (i is an integer satisfying 1 ≤ i ≤ N-1), but may not include a demultiplexing unit and a multiplexing unit.

The two transmission paths connecting the extension station 11 and other equipment are connected to the demultiplexing unit 111 and the multiplexing unit 118 in the configuration of the extension station 11.

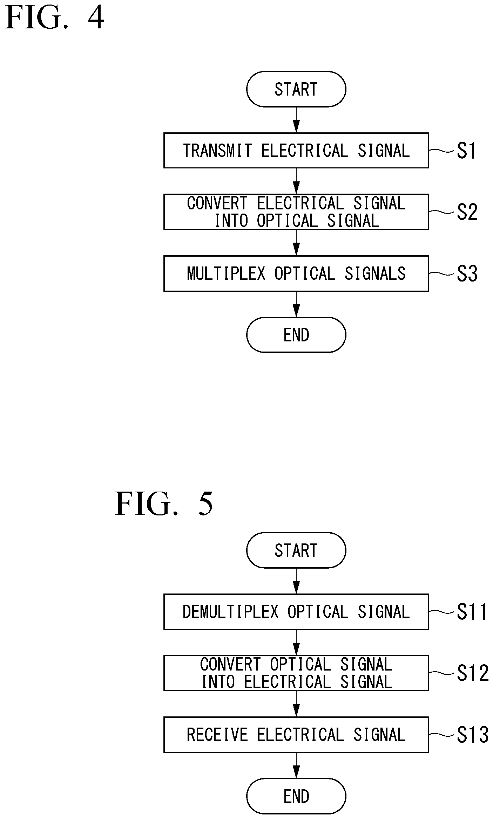

FIG. 4 is a flowchart showing a transmission method of the aggregate station 10. The transmission unit 100 transmits an electrical signal to the E/O conversion unit 101 (step S1). The E/O conversion unit 101 converts the electrical signal into an optical signal (step S2). The multiplexing unit 102 multiplexes optical signals (step S3). An optical signal after the multiplexing is transmitted to the first extension station 11-1.

FIG. 5 is a flowchart showing a reception method of the aggregate station 10. The demultiplexing unit 103 demultiplexes an optical signal received from the first extension station 11-1 (step S11). The O/E conversion unit 104 converts the optical signal into an electrical signal (step S12). The reception unit 105 receives the electrical signal (step S13).

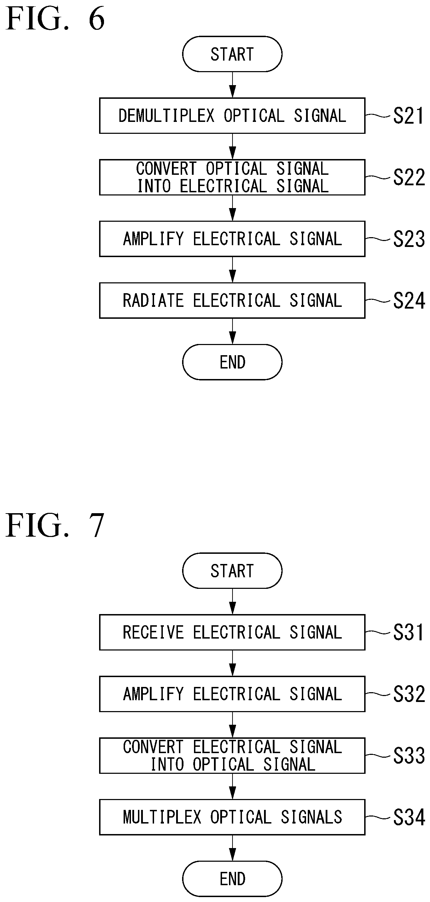

FIG. 6 is a flowchart showing a communication method in which the extension station 11 communicates with upstream equipment. The demultiplexing unit 111 demultiplexes an optical signal received from the upstream equipment (step S21). Optical signals obtained in the demultiplexing process are transmitted to the O/E conversion unit 112 and the downstream equipment. The O/E conversion unit 112 converts the optical signal into an electrical signal (step S22). The transmission amplifier 113 amplifies the electrical signal (step S23). The electrical signal is radiated from the antenna 115 via the circulator 114 (step S24).

FIG. 7 is a flowchart showing a communication method in which the extension station 11 communicates with downstream equipment. The antenna 115 receives an electrical signal (step S31). The electrical signal is amplified by the reception amplifier 116 via the circulator 114 (step S32). The E/O conversion unit 117 converts the electrical signal into an optical signal (step S33). The multiplexing unit 118 multiplexes optical signals (step S34). An optical signal obtained in the multiplexing process is transmitted to the upstream equipment.

In the optical communication system 1 according to the first embodiment, the extension station 11 does not include an optical splitter. Thereby, the loss of the optical signal can be suppressed.

In the optical communication system 1 according to the first embodiment, the wavelength of the optical signal transmitted by the transmission unit 100 and the wavelength of the optical signal received by the reception unit 105 may be the same.

### <Second embodiment>

In an optical communication system 1 according to a second embodiment, pieces of equipment of an aggregate station 10 and an extension station 11 are connected by a single transmission path 14. That is, a signal transmitted to an upstream side by the extension station 11 and a signal received from the upstream side are transmitted through the same transmission path and a signal transmitted to a downstream side by the extension station 11 and a signal received from the downstream side are transmitted through the same transmission path.

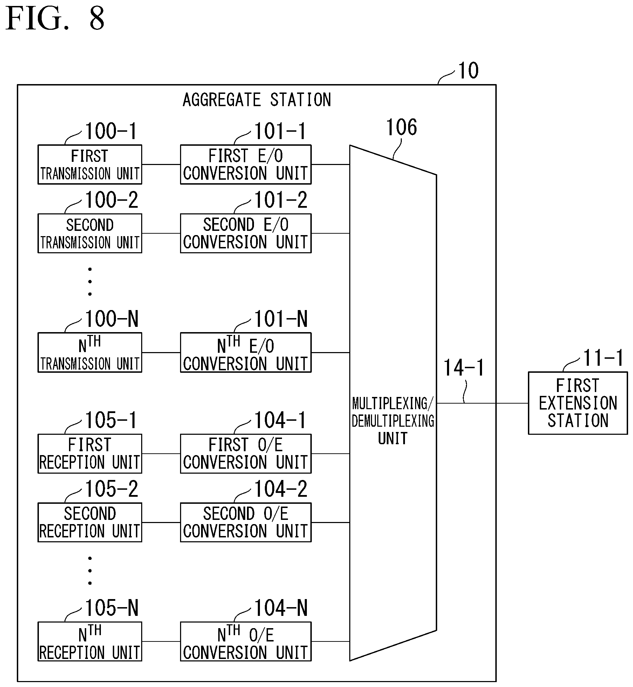

FIG. 8 is a diagram showing a configuration of the aggregate station 10 according to the second embodiment. Unlike the aggregate station 10 according to the first embodiment, the aggregate station 10 according to the second embodiment includes a multiplexing/demultiplexing unit 106 instead of the multiplexing unit 102 and the demultiplexing unit 103. The multiplexing/demultiplexing unit 106 multiplexes optical signals received from E/O conversion units 101 and transmits an optical signal obtained in the multiplexing process to a first extension station 11-1. Moreover, the multiplexing/demultiplexing unit 106 demultiplexes an optical signal received from the first extension station 11-1 and transmits optical signals obtained in the demultiplexing process to O/E conversion units 104. A wavelength of the optical signal transmitted to an i^{th} O/E conversion unit 104-i by the multiplexing/demultiplexing unit 106 is denoted by λ_{ULi} and differs according to each O/E conversion unit 104. That is, the multiplexing/demultiplexing unit 106 functions as both the multiplexing unit 102 and the demultiplexing unit 103.

The aggregate station 10 and the first extension station 11-1 according to the second embodiment are connected by a single transmission path. The single transmission path connecting the aggregate station 10 and the first extension station 11-1 is connected to the multiplexing/demultiplexing unit 106 in the configuration of the aggregate station 10.

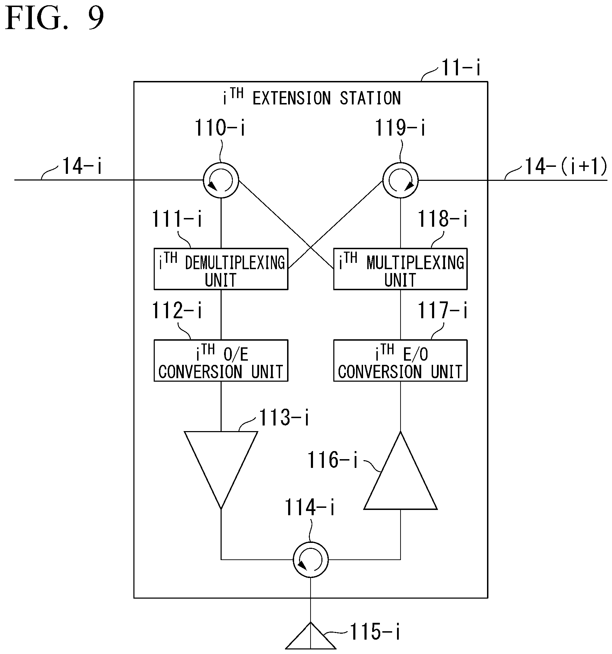

FIG. 9 is a diagram showing the configuration of the i^{th} extension station 11-i (i is an integer satisfying 1 ≤ i ≤ N) according to the second embodiment. The i^{th} extension station 11-i according to the second embodiment includes an i^{th} upstream-side circulator 110-i and an i^{th} downstream-side circulator 119-i in addition to the i^{th} extension station 11-i according to the first embodiment. Moreover, a connection relationship of an i^{th} demultiplexing unit 111-i and an i^{th} multiplexing unit 118-i according to the second embodiment and other configurations is different from a connection relationship of the i^{th} demultiplexing unit 111-i and the i^{th} multiplexing unit 118-i according to the first embodiment and other configurations.

The i^{th} upstream-side circulator 110-i transmits the optical signal received from the upstream equipment via a transmission path 14-i to the i^{th} demultiplexing unit 111-i. The i^{th} upstream-side circulator 110-i transmits the optical signal received from the i^{th} multiplexing unit 118-i to the upstream equipment via the transmission path 14-i.

The i^{th} demultiplexing unit 111-i according to the second embodiment separates an optical signal having a wavelength λ_{DLi} from an optical signal received from the i^{th} upstream-side circulator 110-i. The i^{th} demultiplexing unit 111-i according to the second embodiment transmits an optical signal having the wavelength λ_{DLi} to the i^{th} O/E conversion unit 112-i and transmits an optical signal not having the wavelength λ_{DLi} to the i^{th} downstream-side circulator 119-i.

The i^{th} multiplexing unit 118-i according to the second embodiment multiplexes optical signals transmitted from the i^{th} E/O conversion unit 117-i and the i^{th} downstream-side circulator 119-i and transmits an optical signal obtained in the multiplexing process to the i^{th} upstream-side circulator 110-i.

The i^{th} downstream-side circulator 119-i transmits an optical signal received from the (i+1)^{th} extension station 11-(i+1), which is downstream equipment, via the transmission path 14-(i+1) to the i^{th} multiplexing unit 118-i. The i^{th} downstream-side circulator 119-i transmits an optical signal received from the i^{th} demultiplexing unit 111-i to the (i+1)^{th} extension station 11-(i+1), which is the downstream equipment, via the transmission path 14-(i+1).

With the above configuration, the optical signal received from the upstream side by the i^{th} extension station 11-i is input to the i^{th} demultiplexing unit 111-i via the i^{th} upstream-side circulator 110-i. Subsequently, an optical signal having a wavelength λ_{DLi} is input to the i^{th} O/E conversion unit 112-i and an optical signal having a wavelength other than λ_{DLi} is input to the (i+1)^{th} extension station 11-(i+1) via the i^{th} downstream-side circulator 119-i.

Moreover, the optical signal received from the downstream side by the i^{th} extension station 11-i is input to the i^{th} multiplexing unit 118-i via the i^{th} downstream-side circulator 119-i. Subsequently, the optical signal input from the i^{th} downstream-side circulator 119-i and the optical signal input from the i^{th} E/O conversion unit 117-i are multiplexed in the i^{th} multiplexing unit 118-i and an optical signal obtained in the multiplexing process is input to the upstream equipment via the i^{th} upstream-side circulator 110-i.

The optical communication system 1 in the second embodiment can reduce the number of transmission paths connecting pieces of equipment as compared with the optical communication system 1 in the first embodiment.

### <Other embodiments>

Although embodiments of the present invention have been described above in detail with reference to the drawings, specific configurations are not limited to the embodiments and other designs and the like may also be included without departing from the spirit and scope of the present invention.

In the optical communication system 1 according to the first embodiment, two transmission paths connecting pieces of equipment are, for example, two fibers, but may be two cores among multicore fibers.

Although an array of the plurality of extension stations 11 having a cascade connection does not branch in the middle in the optical communication system 1 according to the above-described embodiment, the array of the extension stations 11 may branch in the middle in other embodiments. That is, two or more extension stations 11 may be connected to the downstream side of a certain extension station 11.

Although the multiplexing unit 102, the demultiplexing unit 103, the multiplexing/demultiplexing unit 106, the demultiplexing unit 111, and the multiplexing unit 118 transmit a plurality of optical signals having different wavelengths by demultiplexing or multiplexing optical signals on the basis of wavelengths in the above embodiment, the present invention is not limited thereto. For example, the optical communication system 1 may multiplex or demultiplex optical signals according to frequency division multiplexing/demultiplexing or time division multiplexing/demultiplexing and transmit optical signals obtained in the multiplexing or demultiplexing process.

The extension station 11 may include a control unit 120. When the demultiplexing unit 111 and the multiplexing unit 118 demultiplex and multiplex the optical signals according to time division multiplexing/demultiplexing, the circulator 114 may be a time division duplexing (TDD) switch and the control unit 120 may control the TDD switch to switch a connection of the transmission amplifier 113 and the circulator 114 and a connection of the circulator 114 and the reception amplifier 116. When the demultiplexing unit 111 and the multiplexing unit 118 demultiplex and multiplex optical signals according to time division multiplexing, the wavelength λ_{DLi} of the optical signal transmitted by the i^{th} E/O conversion unit 101-i and the wavelength λ_{ULi} of the optical signal received by the i^{th} O/E conversion unit 104-i may be the same wavelength. For example, λ_{DL1} and λ_{UL1} may be the same wavelength.

The antenna 115 is an array antenna controllable in a beam direction and the control unit 120 may control the antenna 115 so that the antenna 115 changes the beam direction in which transmission and reception are performed.

The control unit 120 may be controlled on the basis of a control signal received from the aggregate station 10. The control signal may be multiplexed into a downlink optical signal to be transmitted by the aggregate station 10 according to subcarrier multiplexing, polarization multiplexing, or wavelength multiplexing and transmitted to the extension station 11. The wavelength of the control signal may be a wavelength different from either λ_{DLi} orλ_{ULi}.

The optical communication system 1 employs analog radio-over-fiber (RoF) and the present invention is not limited thereto. The optical communication system 1 may employ digital RoF (for example, a common public radio interface (CPRI) or enhanced common public radio interface (eCPRI)) or digital coherent transmission, the aggregate station 10 may include an A/D converter, each extension station 11 includes a digital-to-analog (D/A) converter, and the aggregate station 10 may transmit a digital signal.

The present invention can be applied even if the aggregate station 10 and the extension station are connected by a mobile fronthaul in the optical communication system 1.

### [Reference Signs List]

10 Aggregate station
11 Extension station
12 Downstream transmission path
13 Upstream transmission path
14 Transmission path
100 Transmission unit
101 E/O conversion unit
102 Multiplexing unit
103 Demultiplexing unit
104 O/E conversion unit
105 Reception unit
106 Multiplexing/demultiplexing unit
110 Upstream-side circulator
111 Demultiplexing unit
112 O/E conversion unit
113 Transmission amplifier
114 Circulator
115 Antenna
116 Reception amplifier
117 E/O conversion unit
118 Multiplexing unit
119 Downstream-side circulator

## Claims

1. An optical communication system having an aggregate station at a head and a plurality of extension stations connected in series,
wherein each of the plurality of extension stations demultiplexes a signal received from upstream-side equipment into a first demultiplexed signal having a locally allocated wavelength and a second demultiplexed signal having another wavelength and transmits the second demultiplexed signal to downstream-side equipment, and
wherein each of the plurality of extension stations multiplexes a signal received from the downstream-side equipment and a locally processed signal and transmits a multiplexing result to the upstream-side equipment.

2. The optical communication system according to claim 1,
wherein the extension station transmits a signal obtained by multiplexing the signal received from the downstream-side equipment and the locally processed signal to the upstream-side equipment via a transmission path through which the signal received from the upstream-side equipment has been transmitted, and
wherein the extension station transmits the second demultiplexed signal to the downstream-side equipment via a transmission path through which the signal received from the downstream-side equipment has been transmitted.

3. The optical communication system according to claim 2, wherein the extension station includes
a demultiplexing unit configured to demultiplex the received signal into the first demultiplexed signal having the locally allocated wavelength and the second demultiplexed signal having the other wavelength;
a multiplexing unit configured to multiplex the signal received from the downstream-side equipment and the locally processed signal;
an upstream-side circulator configured to transmit the signal received from the upstream-side equipment to the demultiplexing unit and transmit a signal obtained in a multiplexing process received from the multiplexing unit to the upstream-side equipment; and
a downstream-side circulator configured to transmit the second demultiplexed signal received from the demultiplexing unit to the downstream-side equipment and transmit the signal received from the downstream-side equipment to the multiplexing unit.

4. An extension station in an optical communication system having an aggregate station at a head and a plurality of extension stations connected in series,
wherein the extension station demultiplexes a signal received from upstream-side equipment into a first demultiplexed signal having a locally allocated wavelength and a second demultiplexed signal having another wavelength and transmits the second demultiplexed signal to downstream-side equipment, and
wherein the extension station multiplexes a signal received from the downstream-side equipment and a locally processed signal and transmits a multiplexing result to the upstream-side equipment.

5. A communication method of an extension station in an optical communication system having an aggregate station at a head and a plurality of extension stations connected in series, the communication method comprising steps of:
demultiplexing a signal received from upstream-side equipment into a first demultiplexed signal having a locally allocated wavelength and a second demultiplexed signal having another wavelength and transmitting the second demultiplexed signal to downstream-side equipment, and
multiplexing a signal received from the downstream-side equipment and a locally processed signal and transmitting a multiplexing result to the upstream-side equipment.
